# EUROPÄISCHE PATENTANMELDUNG

(11) **EP 1 385 082 A1**
(43) Veröffentlichungstag der Anmeldung: **28.01.2004**
(21) Anmeldenummer: 03101744.5
(22) Anmeldetag: 13.06.2003
(51) Int. Cl.: G06F 3/033, G06F 3/023, G06F 1/16

(54) **Eingabevorrichtung für ein Endgerät**

(30) Priorität: 24.07.2002 DE 10233608
(71) Anmelder: SIEMENS AKTIENGESELLSCHAFT, 80333 München (DE)
(72) Erfinder: Zibert, Klaus, 80335, München (DE)

(57) **Zusammenfassung**

Die vorliegende Erfindung betrifft eine Eingabevorrichtung (1) für ein Endgerät, insbesondere ein mobiles Endgerät, aufweisend eine Anzeigevorrichtung (2), einen elektrischen Kompass (5), welche eine Bewegung der Eingabevorrichtung in der horizontalen Ebene detektiert und Mittel (4) zum Auswerten der detektierten Informationen, wobei die Mittel zum Auswerten geeignet sind, mit der Anzeigevorrichtung in Verbindung zustehen. Die Eingabevorrichtung ist geeignet, eine Aktion in der Anzeigevorrichtung in Abhängigkeit von der Bewegung der Eingabevorrichtung in der horizontalen Ebene zu initiieren. Bevorzugt umfasst die Aktion eine Markierung eines auf der Anzeigevorrichtung angezeigten Menüs.

## Beschreibung

Die vorliegende Erfindung betrifft eine Eingabevorrichtung für ein Endgerät und ein Endgerät aufweisend eine Eingabevorrichtung.

Derartige Eingabevorrichtungen können unter Anderem in Mobilfunkendgeräten Anwendung finden.

Nutzer mobiler Endgeräte wollen diese ständig bei sich tragen und überallhin mitnehmen. Aus diesem Grund werden mobile Endgeräte, beispielsweise Mobilfunkendgeräte, immer kleiner ausgebildet. Bei solchen miniaturisiert ausgebildeten Mobilfunkendgeräten ist es jedoch aufgrund der geringen Gerätegröße problematisch, eine bekannte Eingabevorrichtung, wie beispielsweise eine alphanumerische Tastatur mit Funktionstasten anzubringen. Tasten eines Mobilfunkendgeräts sollten eine Mindestgröße aufweisen, so dass sie noch von einer menschlichen Hand bedient werden können. Bei solchen miniaturisierten Endgeräten besteht das Problem, eine einfache Menüführung, Eingabe von Rufnummern und Textnachrichten, d.h. sogenannten SMS (Short Message Service), zu gewährleisten. Bei zukünftigen Mobilfunkendgeräten wird darüber hinaus daran gedacht, die alphanumerische Tastatur komplett zu ersetzen, so dass eine Eingabe von Daten auf andere Weise realisiert werden muss.

Bekannt ist der Einsatz von Beschleunigungssensoren in Eingabegeräten. Nachteilig dabei ist jedoch, dass man bei einer schnellen oder langsamen Auswahlbewegung unterschiedliche Werte erhält.

Somit liegt der vorliegenden Erfindung die Aufgabe zugrunde, eine platzsparende, einfache und zuverlässige Eingabe beliebiger Informationen in einem Endgerät zu ermöglichen.

Diese Aufgabe wird erfindungsgemäß durch eine Eingabevorrichtung für ein Endgerät mit den Merkmalen des Anspruchs 1 und ein Endgerät mit den Merkmalen des Anspruchs 11 gelöst. Die Unteransprüche definieren jeweils bevorzugte und vorteilhafte Ausführungsformen der vorliegenden Erfindung.

Die erfindungsgemäße Eingabevorrichtung für ein Endgerät weist eine Anzeigevorrichtung, einen elektrischen Kompass, welcher eine Bewegung der Eingabevorrichtung in der horizontalen Ebene detektiert und Mittel zum Auswerten der detektierten Informationen, wobei die Mittel zum Auswerten geeignet sind, mit der Anzeigevorrichtung in Verbindung zu stehen, auf. Die Eingabevorrichtung ist geeignet, eine Aktion in der Anzeigevorrichtung in Abhängigkeit von der Bewegung der Eingabevorrichtung in der horizontalen Ebene zu initiieren. Bei dem Endgerät handelt es sich bevorzugt um ein mobiles Endgerät. Grundsätzlich ist die vorliegende Erfindung aber auch auf ein feststehendes Endgerät, welches eine abnehmbare Eingabevorrichtung aufweist, anwendbar. Diese abnehmbare Eingabevorrichtung kann dabei entweder über Kabel oder drahtlose Kommunikation mit dem Endgerät in Verbindung stehen. Bei der Anzeigevorrichtung kann es sich um jede Art von Anzeigemitteln, d.h. beispielsweise Bildschirm oder Display, handeln. Der elektrische Kompass ist in der Eingabevorrichtung angeordnet. Bei einer entsprechenden Bewegung der Eingabevorrichtung in der horizontalen Ebene orientiert sich der elektrische Kompass entsprechend dem Erdmagnetfeld. Die Erfindung stellt folglich eine neuartige Möglichkeit der Eingabe von Daten in Endgeräte dar.

In einer bevorzugten Ausführungsform umfasst die in der Anzeigevorrichtung in Abhängigkeit von der Bewegung der Eingabevorrichtung in der horizontalen Ebene initiierten Aktion eine Markierung eines auf der Anzeigevorrichtung angezeigten Menüs. Durch Bewegen des Endgerät bzw. der Eingabevorrichtung kann beispielsweise ein sogenannter "Cursor" dazu verwendet werden, um diesen entsprechend der Bewegung des Endgeräts auf der Anzeigevorrichtung zu bewegen.

In einer Weiterbildung der vorliegenden Erfindung ist die Eingabevorrichtung geeignet, durch ihre Bewegung, auf der Anzeigevorrichtung dargestellte Zeichen zu markieren. Durch die Bewegung der Eingabevorrichtung kann beispielsweise ein Cursor in der Anzeigevorrichtung bewegt werden, so dass dargestellte Zeichen, insbesondere Buchstaben, durch die Bewegung des Cursors markiert werden können.

In einer bevorzugten Anzeigevorrichtung der vorliegenden Erfindung ist die Eingabevorrichtung geeignet, eine Auswahl einer Markierung mit Hilfe einer Taste vorzunehmen. Durch die vorstehend beschriebene Markierung wurde noch keine Auswahl eines Zeichens bzw. eines Menüs getroffen. Nach einer Markierung kann somit eine Auswahl durch Betätigung einer separaten Taste erfolgen. Dabei ist es denkbar, dass diese Taste als virtuelle Taste, d.h. als sogenanntes "Softkey", ausgebildet ist.

In einer Weiterbildung der vorliegenden Erfindung ist die Eingabe geeignet, eine Auswahl einer Markierung mit Hilfe eines Zeitgebers, einem sogenannten "Timer", vorzunehmen. Dabei kann beispielsweise wiederum ein Buchstabe mit Hilfe der vorstehend beschriebenen Markierung über einen Cursor bestimmt werden. Eine endgültige Auswahl erfolgt, falls der Cursor ein vorbestimmtes Zeitintervall über einem markierten Buchstaben verweilt.

In einer Weiterbildung der vorliegenden Erfindung ist die Eingabevorrichtung geeignet, eine Auswahl einer Markierung mit Hilfe einer Sprachsteuerung vorzunehmen. Die Markierung kann dabei wiederum wie vorstehend beschrieben erfolgen. Eine Auswahl einer vorgenommenen Markierung erfolgt anschließend beispielsweise durch Sprechen des Wortes "Auswahl".

In einer bevorzugten Ausführungsform der vorliegenden Erfindung weist die Eingabevorrichtung des Weiteren einen Neigungssensor auf, welcher geeignet ist, eine Auswahl einer Markierung durch Kippen des Endgeräts vorzunehmen. Ein solcher Neigungssensor bietet sich beispielsweise in einem in einer Armbanduhr integrierten Mobilfunkendgerät an. Durch Drehen des Mobilfunkendgeräts in der horizontalen Ebene kann man Buchstaben für SMS markieren. Kippt man das Endgerät nun aus der horizontalen Ebene, beispielsweise das Handgelenk mit dem Endgerät nach vorne, so erfolgt eine Auswahl eines markierten Zeichens.

In einer Weiterbildung der vorliegenden Erfindung ist der für die Initiierung verwendete Gradbereich in einen Gradbereich kleiner als 360° skaliert. Für den Nutzer eines erfindungsgemäßen Endgeräts mit einer Eingabevorrichtung kann es umständlich sein, wenn er zur Eingabe von Zeichen das Endgerät um bis zu 360° drehen muss. Insbesondere bei einem am Handgelenk eines Nutzers angebrachten Endgerät bereitet ein Drehen um 360° Probleme. Somit ist es denkbar, dass der Bereich von 360° in einen kleiner Winkelbereich skaliert wird. So ist es beispielsweise möglich, dass eine Auswahl der Zahlen 0 bis 9 vorgegeben ist. Dabei entsprechen 1° bis 2° einer "0", 3° bis 4° einer "1", 5° bis 6° einer "2", usw.. Die Skalierung kann dabei entsprechend der vorgegebenen Anzahl von Zeichen bzw. Menüpunkten und der gewünschten Drehbarkeit des Endgeräts angepasst werden. Es ist aber auch denkbar, dass die Eingabevorrichtung nur eine Bewegung eines Cursors bzw. eines Menüs in zwei Richtungen, insbesondere links oder rechts, ermöglicht. Dazu muss der Gradbereich entsprechend der gewünschten Bewegung skaliert werden.

In einer bevorzugten Ausführungsform der vorliegenden Erfindung beginnt unabhängig von der Ausrichtung der Eingabevorrichtung in der horizontalen Ebene, eine Auswahl in einer vorher definierten Ausgangsposition. So ist es denkbar, dass unabhängig von der Ausrichtung des Endgeräts, d.h. des elekt rischen Kompasses, nach Süden, Norden, Westen oder Osten, immer das Auswahlmittel auf eine vorbestimmte Position ausgerichtet ist. So kann sich ein Cursor im ursprünglichen Zustand immer bei einem "A" befinden, unabhängig davon, ob das Endgerät nach Süden, Norden, Westen oder Osten ausgerichtet ist. Eine Berechnung kann dabei durch Subtraktion der Winkelwerte erfolgen.

Die Eingangs gestellte Aufgabe wird auch durch ein Endgerät, insbesondere ein Mobilfunkendgerät, aufweisend eine erfindungsgemäße Eingabevorrichtung gelöst. Bevorzugt ist das Endgerät für einen Einsatz im Wasser geeignet. Da bei der vorliegenden Erfindung keine beweglichen Teile wie Tasten benötigt werden, kann Wasserdichtigkeit bzw. zumindest ein Spritzschutz gewährleistet werden.

Die vorliegende Erfing hat gegenüber bekannten Lösungen, insbesondere Beschleunigungssensoren, den Vorteil, dass eine Auswahl über statische Werte erfolgt. Dadurch kann die Auswahlbewegung schnell oder langsam geschehen, wobei man trotzdem immer denselben Wert erhält.

Die Erfindung wird im Folgenden unter Hinweis auf die beigefügte Zeichnung anhand eines Ausführungsbeispiels näher erläutert. Die dort dargestellten Merkmale und auch die bereits oben beschriebenen Merkmale können nicht nur in der genannten Kombination, sondern auch einzeln oder in anderen Kombinationen erfindungswesentlich sein. Es zeigt:

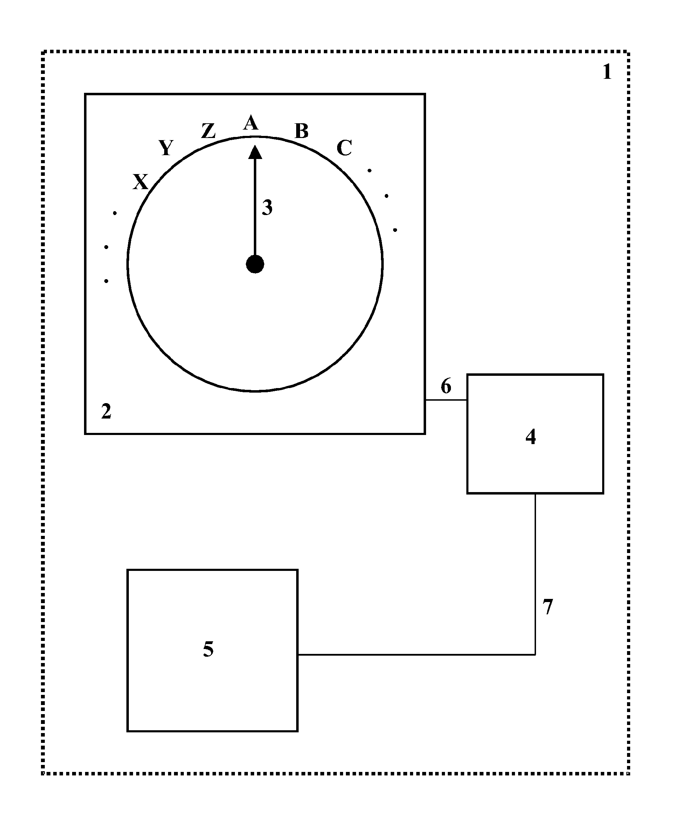

- Figur 1: eine schematische Darstellung eines Ausführungsbeispiels einer Eingabevorrichtung für ein Endgerät.

Figur 1 zeigt schematisch ein Endgerät 1, welches unter Anderem ein Display 2, einen elektrischen Kompass 5 und eine Auswertungsvorrichtung 4 aufweist. Die Auswertungsvorrichtung 4 ist mit dem Display und dem elektrischen Kompass verbunden 6, 7. Auf dem Display 2 wird ein um einen Kreis angeordnetes A1 phabet gezeigt. Entsprechend der Bewegung des elektrischen Kompasses dreht sich das Anzeigemittel 3. Durch Drehen der Eingabevorrichtung 1, d.h. des elektrischen Kompasses 4, bewegt sich somit der Zeiger 3, wodurch eine Markierung eines Buchstabens ermöglicht wird. Nach erfolgreicher Markierung kann eine Auswahl beispielsweise mit Hilfe einer separaten Funktionstaste (nicht eingezeichnet) oder durch Kippen der Eingabevorrichtung, wobei das Kippen von einem Neigungssensor (nicht eingezeichnet) detektiert wird, erfolgen. Folglich kann durch Drehen des Endgeräts im Erdmagnetfeld eine Kompass-Gradzahl ermittelt werden, wodurch der dazugehörige Buchstabe angezeigt wird. So entspricht beispielsweise 1° bis 5° dem Buchstaben "A", 5° bis 10° dem Buchstaben "B" usw.. Somit erfolgt eine Verknüpfung von Kompass-Gradzahlen mit Menüpunkten bzw. Zeichen.

## Patentansprüche

1. Eingabevorrichtung (1) für ein Endgerät, insbesondere ein mobiles Endgerät, aufweisend:
- eine Anzeigevorrichtung (2),
- einen elektrischen Kompass (5), welcher eine Bewegung der Eingabevorrichtung in der horizontalen Ebene detektiert, und
- Mittel (4) zum Auswerten der detektierten Informationen, wobei die Mittel zum Auswerten geeignet sind, mit der Anzeigevorrichtung in Verbindung (6) zu stehen,
**dadurch gekennzeichnet, dass**
die Eingabevorrichtung geeignet ist, eine Aktion in der Anzeigevorrichtung in Abhängigkeit von der Bewegung der Eingabevorrichtung in der horizontalen Ebene zu initiieren.

2. Eingabevorrichtung gemäß Anspruch 1,
**dadurch gekennzeichnet, dass**
die Aktion eine Markierung eines auf der Anzeigevorrichtung angezeigten Menüs umfasst.

3. Eingabevorrichtung gemäß einem der vorhergehenden Ansprüche,
**dadurch gekennzeichnet, dass**
die Eingabevorrichtung geeignet ist, durch deren Bewegung auf der Anzeigevorrichtung dargestellte Zeichen zu markieren.

4. Eingabevorrichtung gemäß einem der Ansprüche 2 oder 3,
**dadurch gekennzeichnet, dass**
die Eingabevorrichtung geeignet ist, eine Auswahl einer Markierung mit Hilfe einer Taste vorzunehmen.

5. Eingabevorrichtung gemäß einem der Ansprüche 2 oder 3,
**dadurch gekennzeichnet, dass**
die Eingabevorrichtung geeignet ist, eine Auswahl einer Markierung mit Hilfe eines Zeitgebers vorzunehmen.

6. Eingabevorrichtung gemäß einem der Ansprüche 2 oder 3,
**dadurch gekennzeichnet, dass**
die Eingabevorrichtung geeignet ist, eine Auswahl einer Markierung mit Hilfe einer Sprachsteuerung vorzunehmen.

7. Eingabevorrichtung gemäß einem der Ansprüche 2 oder 3,
**dadurch gekennzeichnet, dass**
die Eingabevorrichtung einen Neigungssensor aufweist, welcher geeignet ist, eine Auswahl einer Markierung durch Kippen des Endgeräts vorzunehmen.

8. Eingabevorrichtung gemäß einem der vorhergehenden Ansprüche,
**dadurch gekennzeichnet, dass** Gradbereichen des elektronischen Kompasses Bewegungsrichtungen, Menüpunkte oder Zeichen zugeordnet sind.

9. Eingabevorrichtung gemäß Anspruch 8,
**dadurch gekennzeichnet, dass**
der für die Initiierung verwendete Gradbereich in einen Gradbereich kleiner als 360° skaliert ist.

10. Eingabevorrichtung gemäß einem der vorhergehenden Ansprüche,
**dadurch gekennzeichnet, dass** unabhängig von der Ausrichtung der Eingabevorrichtung in der horizontalen Ebene, eine Auswahl in einer vorher definierten Ausgangsposition beginnt.

11. Endgerät, insbesondere Mobilfunk-Endgerät, aufweisend eine Eingabevorrichtung gemäß einem der vorhergehenden Ansprüche.

12. Endgerät gemäß Anspruch 11,
**dadurch gekennzeichnet, dass** das Endgerät für einen Einsatz im Wasser geeignet ist.
